# EUROPÄISCHE PATENTSCHRIFT

(11) **EP 0 407 736 B1**
(45) Veröffentlichungstag und Bekanntmachung des Hinweises auf die Patenterteilung: **01.12.1993**
(21) Anmeldenummer: 90110685.6
(22) Anmeldetag: 06.06.1990
(51) Int. Cl.: F02D 41/40, F02D 41/14

(54) **Verfahren zur Steuerung der Kraftstoffzumessung in einer Brennkraftmaschine**
Method of controlling the fuel feed in a combustion engine
Procédé de commande de l'alimentation en carburant dans un moteur à combustion

(30) Priorität: 12.07.1989 DE 3922859
(43) Veröffentlichungstag der Anmeldung: 16.01.1991
(73) Patentinhaber: ROBERT BOSCH GMBH, 70442 Stuttgart (DE)
(72) Erfinder: Löffler, Alf, Dipl.-Phys., D-7145 Markgröningen Talhausen (DE); Wahl, Josef, Dipl.-Ing., D-7000 Stuttgart 80 (DE); Laufer, Helmut, Dipl.-Ing., D-7016 Gerlingen (DE); Engel, Gerhard, Dipl.-Ing., D-7000 Stuttgart 30 (DE); Locher, Johannes, Ing. grad., D-7000 Stuttgart 50 (DE); Grieshaber, Hermann, Dipl.-Ing. (FH), D-7447 Aichtal-Aich (DE); Flaig, Ulrich, Dipl.-Ing., D-7145 Markgröningen (DE); Kull, Hermann, Dipl.-Ing., D-7000 Stuttgart 1 (DE); Piwonka, Friedolin, Dr.-Ing., D-7145 Markgröningen (DE); Eblen, Ewald, Dipl.-Ing., D-7000 Stuttgart 75 (DE); Polach, Wilhelm, Dr.-Ing., D-7141 Möglingen (DE); Schmitt, Alfred, Dr.-Ing., D-7257 Ditzingen 4 (DE); Tauscher, Joachim, Dipl.-Ing. (BA), D-7000 Stuttgart 1 (DE); Birk, Manfred, Dipl.-Ing., D-7141 Oberriexingen (DE); Karle, Anton, Dipl.-Ing., D-7730 VS-Villingen (DE); Lauvin, Pierre, F-69340 Francheville (FR)

(56) Entgegenhaltungen:
- EP-A- 0 221 832
- WO-A-87/06689
- FR-A- 2 476 212
- FR-A- 2 509 371
- FR-A- 2 610 992
- GB-A- 2 073 448
- 16. ISATA, FLORENZ 11-15 Mai 1987; Vortrag 87010

## Beschreibung

### Stand der Technik

Die Erfindung betrifft eine Einrichtung zur Steuerung der Kraftstoffzumessung in eine Brennkraftmaschine gemäß dem Oberbegriff des Hauptanspruchs. Eine solche Einrichtung ist aus der DE 35 40 811 bzw. aus dem 16. ISATA, Florenz 11-15. Mai 1987, Vortrag 87010 bekannt.

Dort wird eine Einrichtung zur Steuerung der Kraftstoffzumessung in eine Brennkraftmaschine beschrieben. Eine Kraftstoffpumpe umfaßt einen von der Nockenwelle angetriebenen, in einem Pumpenzylinder geführten Pumpenkolben sowie einen mit der Einspritzdüse über einen Druckkanal in Verbindung stehenden Pumpenarbeitsraum, dem über ein elektromagnetisches Ventil Kraftstoff zuführbar ist. Eine elektronische Steuereinrichtung bestimmt die Ansteuerimpulse für das elektromagnetische Ventil abhängig von durch Markierungen auf der Kurbelwelle ausgelösten Steuerimpulsen und durch Auszählen von durch Markierungen auf der Nockenwelle ausgelösten Impulsen. Da die Markierungen auf der Nockenwelle einen endlichen Abstand besitzen ist die Zumessung sehr ungenau. Der Förderbeginn und das Förderende kann nur in diskreten Zeitabständen, definiert durch den Abstand der Markierungen auf der Nockenwelle, erfolgen. Die Genauigkeit der Zumessung hängt daher von dem Abstand der Markierungen ab. Da diese nicht beliebig klein sein können, ergibt sich zwangsweise eine ungenaue Zumessung.

Ferner ist aus der FR-A 2 476 212 eine Starteinrichtung für eine elektronische Einspritzanlage bekannt. Diese Einrichtung umfaßt einen analogen Winkelsensor. Dieser Winkelsensor erzeugt abhängig von der Umdrehung der Kurbelwelle ein der Winkelstelle der Kurbelwelle entsprechendes Spannungssignal.

Aus der DE-OS 36 42 678 ist eine Meßeinrichtung für Drehwinkel bekannt. Diese Meßeinrichtung liefert ein dem Drehwinkel proportionales analoges Ausgangssignal, wobei ein nahezu linearer Zusammenhang zwischen Drehwinkel und Ausgangssignal besteht.

### Aufgabe der Erfindung

Der Erfindung liegt die Aufgabe zugrunde, eine Einrichtung der eingangs genannten Art derart zu verbessern, daß der Einspritzbeginn und das Einspritzende, und damit die Einspritzmenge beliebig genau gesteuert werden kann. Diese Aufgabe wird durch die Merkmale des Anspruchs 1 gelöst.

### Vorteile der Erfindung

Die erfindungsgemäße Einrichtung mit den Merkmalen des Hauptanspruchs hat gegenüber dem Stand der Technik den Vorteil, daß die Ansteuerung des Förderbeginns und des Förderendes wesentlich genauer erfolgen kann, als bei den Einrichtungen des Standes der Technik.

Vorteilhafte und zweckmäßige Ausgestaltungen der Erfindung sind in den Unteransprüchen gekennzeichnet.

Die Erfindung wird nachstehend anhand der in den Zeichnungen dargestellten Ausführungsform erläutert.

### Zeichnung

Es zeigen Figur 1 eine schematische Darstellung einer Einrichtung zur Steuerung der Kraftstoffzufuhr in eine Brennkraftmaschine, Figur 2 den Zusammenhang zwischen Drehwinkel und Ausgangssignal des Sensors bei einer Ausgestaltung, die nicht gemäß der vorliegenden Erfindung benutzt wird, Figur 3 eine einfache Ausführung des verwendeten Sensors.

### Beschreibung des Ausführungsbeispiels

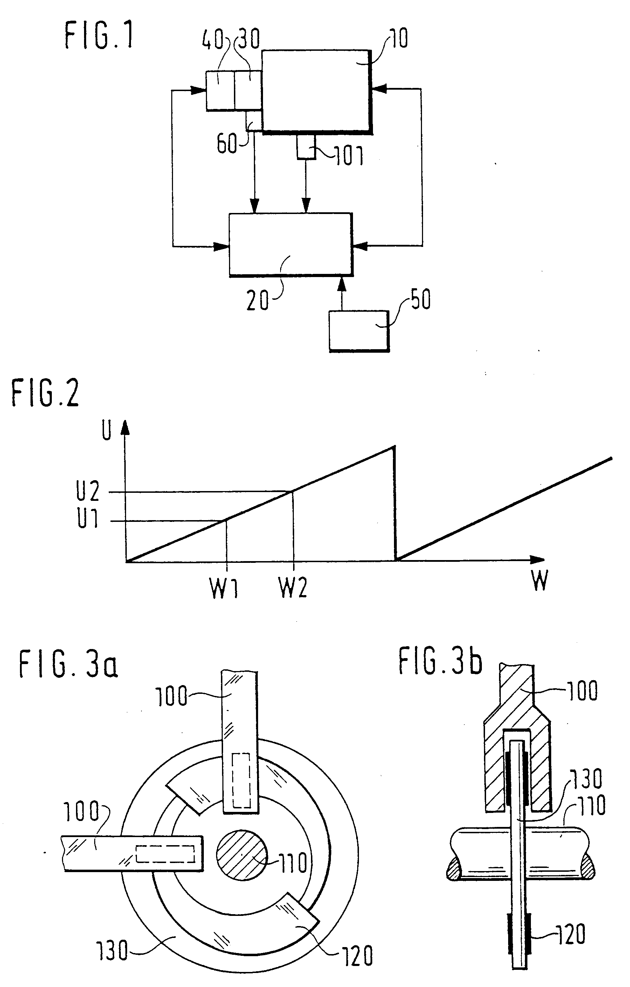

Wie in Figur 1 dargestellt, steht die Brennkraftmaschine 10 mit einer Kraftstoffzumeßeinrichtung bestehend aus einem elektromagnetisch betätigten Ventil 40 und einer Kraftstoffpumpe 30 in Verbindung. Eine elektronische Steuereinrichtung erfaßt Signale einer Meßeinrichtung 60, die den Zustand der Kraftstoffzumeßeinrichtung erkennt, einer Meßeinrichtung 101, die die Betriebskenngrößen der Brennkraftmaschine erfaßt, und weiterer Sensoren 50. Abhängig von diesen Signalen erzeugt die elektronische Steuereinrichtung 20 Signale zur Ansteuerung der Kraftstoffzumeßeinrichtung der Brennkraftmaschine.

Die Kraftstoffzumeßeinrichtung, bestehend aus mindestens einem elektromagnetisch betätigten Ventil und einer Kraftstoffpumpe, führt der Brennkraftmaschine 10 zum von der elektronischen Steuereinrichtung 20 berechneten Förderbeginn bis zum Förderende Kraftstoff zu. Die Kraftstoffzumeßeinrichtung kann zum einen so ausgelegt sein, daß jedem Zylinder ein elektromagnetisches Ventil und eine Kraftstoffpumpe zugeordnet ist. Eine andere Möglichkeit besteht darin, daß nur ein elektromagnetisch betätigtes Ventil und eine Kraftstoffpumpe 30, die eine Verteileinrichtung enthält, die Kraftstoffversorgung bewirkt. Besteht die Kraftstoffzumeßeinrichtung nur aus jeweils einem elektromagnetischen Ventil und einer Kraftstoffpumpe, so mißt diese den Kraftstoff abwechselnd den einzelnen Zylindern zu.

Die Kraftstoffpumpe 30 besteht im wesentlichen aus einem von einer Antriebswelle angetriebenen Pumpenkolben sowie einem mit der Einspritzdüse über einen Druckkanal in Verbindung stehenden Pumpenarbeitsraum. Der Kraftstoff gelangt aus einer Niederdruckkraftstoffquelle über ein elektromagnetisches Ventil in den Pumpenarbeitsraum. Durch die Bewegung der Antriebswelle 110 wird der Pumpenkolben angetrieben, dieser setzt dann den Kraftstoff im Pumpenarbeitsraum unter Druck und fördert ihn über die Einspritzdüse in den Zylinder der Brennkraftmaschine 10. Die Öffnungs- und die Schließzeiten des elektromagnetisch betätigten Ventils 40 legen den Einspritzbeginn und das Einspritzende fest. Die eingespritzte Kraftstoffmenge hängt vom Drehwinkel der Antriebswelle zwischen dem Zeitpunkt des Einspritzbeginns und dem Zeitpunkt des Einspritzendes ab. Zur exakten Kraftstoffeinspritzung muß die Ansteuerung abhängig von der Stellung der Antriebswelle erfolgen.

Bei herkömmlichen Systemen sind dazu auf der Nockenwelle oder der Kurbelwelle Markierungen angebracht. Da diese Markierungen nicht beliebig eng angeordnet sein können, wird die Genauigkeit der Kraftstoffeinspritzung durch den Abstand der Markierungen begrenzt.

Die elektronische Steuereinrichtung 20 berechnet zuerst abhängig von den Betriebskenngrößen der Brennkraftmaschine wie z. B. Drehzahl, Temperaturwerten, und den Ausgangssignalen von verschiedenen Sensoren 50, die gewünschte einzuspritzende Kraftstoffmenge und den gewünschten Einspritzbeginn. Abhängig von den gewünschten Werten für die Menge und den Einspritzbeginn sowie weiteren Größen, wie z. B. dem tatsächlichen Spritzbeginn der Reaktionszeit der elektromagnetisch betätigten Ventile und eventuell im Steuergerät abgespeicherten Daten, ermittelt die Steuereinrichtung die Ansteuerimpulse für die elektromagnetisch betätigten Ventile. Die Berechnung der Ein- und Ausschaltzeitpunkte erfolgt dabei nicht abhängig von Markierungen auf der Nocken- oder Kurbelwelle, sondern abhängig von einem Analogsignal eines Winkelsensors 100, das die Stellung der Antriebswelle des Pumpenkolbens und damit auch die Stellung des Pumpenkolbens charakterisiert.

Figur 2 zeigt einen möglichen Zusammenhang zwischen Stellung der Antriebswelle W und dem Ausgangssignal U der Meßeinrichtung 60. Im Winkelbereich, in dem eine Zumessung erfolgen kann, steigt das Ausgangssignal U der Meßeinrichtung 60 als Funktion vom Drehwinkel W der Antriebswelle an und fällt dann wieder auf den ursprünglichen Wert ab. Berechnet nun die elektronische Steuereinrichtung 20 eine gewünschte Kraftstofförderung vom Drehwinkel W1 bis zum Drehwinkel W2 der Nockenwelle, so erzeugt die Steuereinrichtung bei Vorliegen des Ausgangssignals U1 der Meßeinrichtung einen Ansteuerimpuls und bei Vorliegen des Meßsignals U2 einen Absteuerimpuls für das elektromagnetisch betätigte Ventil. Die Kraftstoffzumessung erfolgt dann, wenn das Ausgangssignal der Meßeinrichtung zwischen den Werten U1 und U2, die den Winkeln W1 und W2 entsprechen, liegt. Durch diese Vorgehensweise kann der Beginn und das Ende bei jeder beliebigen Winkelstellung erfolgen, und ist nicht auf die diskreten Markierungen angewiesen. Die Zumessung erfolgt präzise zwischen dem gewünschten Förderbeginn und dem gewünschten Förderende. Eine präzise Zumessung ergibt sich dadurch, daß jeder Stellung des Pumpenkolbens ein Spannungswert zugeordnet ist. Im einfachsten Fall besteht ein linearer Zusammenhang zwischen Nockenwellenwinkel und Meßsignal.

Die Meßeinrichtung zur Erfassung des Drehwinkels der Antriebswelle kann an der Kurbel-, Nockenwelle oder an der Pumpenantriebswelle angebracht sein. Eine besonders vorteilhafte Ausgestaltung ergibt sich dadurch, daß für jeden Zylinder ein Geber auf der jeweiligen Antriebswelle vorgesehen ist. Damit können bei Pumpe-Düse-Systemen Torsionsschwingungen der Welle kompensiert werden. Die Meßeinrichtung 60 besteht aus einem Geber und einer Auswerteschaltung.

In Figur 3 ist eine besonders einfache Ausführung des Gebers, einem sogenannten Drachengeber, aufgezeigt. Figur 3a zeigt die Frontansicht und Figur 3b die Seitenansicht des Gebers. Auf der Welle 110, deren Drehwinkel erfaßt werden soll, ist eine Trägerscheibe 130 angeordnet. Auf dieser Trägerscheibe 130 ist ein Belag 120 aufgebracht, die Breite des Belags variiert winkelabhängig. Je nach Prinzip, nach dem der Geber arbeitet, kommen unterschiedliche Belagsmaterialien in Frage. Es sind verschiedene Arbeitsweisen für den Geber bekannt, z. B. der Wirbelstrom- bzw. der Halleffekt. Für einen Wirbelstromgeber findet ein leitendes Material, insbesonder Kupfer, als Belag Verwendung. Einer oder mehrere Sensoren 100 erfassen dann ein Signal, das von der Breite des Belages abhängt. Durch die Breite des Belages abhängig vom Drehwinkel kann der funktionale Zusammenhang zwischen Winkel und Meßsignal variiert werden. So ist es möglich, wie in Figur 2 dargestellt, einen linearen Zusammenhang zwischen Winkel W und Ausgangssignal U zu definieren. Bei einem linearen Zusammenhang zwischen Winkel W und Ausgangssignal U ist die weitere Auswertung besonders einfach. Besonders vorteilhaft ist eine erfindungsgemäße Zuordnung, bei der in Winkelbereichen in denen eine hohe Genauigkeit gefordert ist, das Signal U stark ansteigt und in Winkelbereichen in denen nur eine geringe Genauigkeit gefordert wird, das Signal U sich nur gering ändert. Dieses Signal wird dann in der Auswerteschaltung aufbereitet, an deren Ausgang steht dann entweder ein Spannungswert oder ein Stromwert U, der von der Winkelstellung abhängt, zur Verfügung. Eine solche Meßeinrichtung ist z. B. aus der DE-OS 36 42 678 bekannt.

## Patentansprüche

1. Einrichtung zur Steuerung der Kraftstoffzumessung in eine Dieselbrennkraftmaschine (10), mit einer von einer Welle (110) angetriebenen Kraftstoffpumpe (30), bei der der Einspritzbeginn und das Einspritzende durch entsprechende Ansteuerung von zumindest einem elektromagnetisch betätigten Ventil (40) festgelegt wird, wobei Mittel vorgesehen sind, die ausgehend von erfaßten Betriebskenngrößen Winkelsignale (W1, W2), die den gewünschten Einspritzbeginn und die gewünschte einzuspritzende Kraftstoffmenge angeben, bestimmen, dadurch gekennzeichnet, daß ein Winkelsensor (100) ein die Stellung (W) des Pumpenkolbens charakterisierendes Analogsignal (U) erzeugt, wobei der Winkelsensor einen Winkelbereich aufweist, in dem das Analogsignal stärker ansteigt als in den übrigen Bereichen, und daß Mittel vorgesehen sind, die die Ansteuerimpulse für den Förderbeginn und das Förderende ausgegeben, wenn das Analogsignal (U) einen den Winkelsignalen (W1, W2) entsprechenden Wert (U1, U2) erreicht.

2. Einrichtung nach Anspruch 1, dadurch gekennzeichnet, daß der Winkelsensor an der Kurbelwelle angeordnet ist.

3. Einrichtung nach Anspruch 1, dadurch gekennzeichnet, daß der Winkelsensor an der Nockenwelle oder an der Pumpenantriebswelle angeordnet ist.

4. Einrichtung nach wenigstens einem der Ansprüche 1 bis 3, dadurch gekennzeichnet, daß jedem Zylinder der Brennkraftmaschine ein Winkelsensor zugeordnet ist.

## Claims

1. Device for controlling the fuel metering in a diesel internal combustion engine (10), having a fuel pump (30) driven by a shaft (110), in which fuel injection pump (30) the beginning of injection and end of injection are fixed by corresponding activation of at least one electromagnetically actuated valve (40), means being provided which, on the basis of recorded operating parameters, determine angle signals (W1, W2), which give the desired beginning of injection and the desired fuel quantity to be injected, characterized in that an angle sensor (100) generates an analog signal (U) characterizing the position (W) of the pump piston, the angle sensor having an angular range in which the analog signal increases more strongly than in the other ranges, and in that means are provided which give the activation pulses for the beginning of delivery and the end of delivery whenever the analog signal (U) attains a value (U1, U2) corresponding to the angle signals (W1, W2).

2. Device according to Claim 1, characterized in that the angle sensor is arranged on the crankshaft.

3. Device according to Claim 1, characterized in that the angle sensor is arranged on the camshaft or on the pump drive shaft.

4. Device according to at least one of Claims 1 to 3, characterized in that an angle sensor is associated with each cylinder of the internal combustion engine.

## Revendications

1. Installation de commande du dosage du carburant d'un moteur thermique Diesel (10) comprenant une pompe à carburant (30) entraînée par un axe (110) dont le début et la fin de l'injection sont fixés par une commande appropriée d'au moins une électrovanne (40), des moyens étant prévus qui, partant de paramètres de fonctionnement détectés, définissent les signaux d'angle (W1, W2) qui donnent le début de l'injection de consigne et la fin de l'injection de consigne, caractérisée en ce qu'un capteur d'angle (100) génère un signal analogique (U) caractérisant la position (W) du piston de pompe, le capteur d'angle ayant une plage angulaire dans laquelle le signal analogique augmente plus fortement que dans les autres zones et en ce que des moyens sont prévus qui émettent les impulsions de commande du début du transfert et de la fin du transfert, lorsque le signal analogique (U) atteint une valeur (U1, U2) correspondant à l'un des signaux d'angle (W1, W2).

2. Installation selon la revendication 1, caractérisée en ce que le capteur d'angle est monté sur le vilebrequin.

3. Installation selon la revendication 1, caractérisée en ce que le capteur d'angle est monté sur l'arbre à came ou sur l'arbre d'entraînement de la pompe.

4. Installation selon au moins l'une des revendications 1 à 3, caractérisée en ce qu'un capteur d'angle est associé à chaque cylindre du moteur thermique.
